# EUROPEAN PATENT APPLICATION

(11) **EP 0 974 515 A2**
(43) Date of publication of application: **26.01.2000**
(21) Application number: 99500060.1
(22) Date of filing: 15.04.1999
(51) Int. Cl.: B64C 21/04, B64D 13/00

(54) **Aircraft airconditioning energy recovery device**

(30) Priority: 20.07.1998 ES 9801535; 22.12.1998 ES 9802665
(71) Applicant: Munoz Saiz, Manuel, E-28017 Madrid (ES)
(72) Inventor: Munoz Saiz, Manuel, E-28017 Madrid (ES)

(57) **Abstract**

The aircraft air conditioning energy recovery device exploits the high level energy in relation to the exterior, in the air conditioning air flow required for renewal, and involves the placement of the aircraft outflow valve in a duct through which all the air flows said duct being arranged from the pressurized cabin to the inside of the engine inlet diffuser, through the pylon and in some cases through the wing, with said air-conditioning flow being fed back to the input air flow through multiple openings on the inside wall of the inlet diffuser. Said openings or grooves run at a slight angle to the direction of flow to avoid turbulence.The air conditioning input may be introduced through hollow radial guide vanes attached at the front end to the vanes of the first stage of the low-pressure compressor and to the hollow vanes, open at the back, in the first stage or stages of the low-pressure compressor stator where the pressure is lower than that of the cabin air.

## Description

### FIELD OF THE INVENTION.-

Aircraft air conditioning exhaust energy recovery.

### STATE OF THE ART.-

At present, aircraft air conditioning exhaust is expelled through air-flow outlet valves without taking advantage of the pressure or potential energy in relation to the exterior of the aircraft caused by the flow of air required for its renewal, very high in current designs,

### BRIEF DESCRIPTION OF THE INVENTION.-

The aircraft air conditioning energy recovery device exploits the high level energy in relation to the exterior, in the air conditioning air flow required for renewal, and involves the placement of the aircraft outflow valve in a duct through which all the air flows said duct being arranged from the pressurized cabin to the inside of the engine inlet diffuser, through the pylon and in some cases through the wing, with said air-conditioning flow being fed back to the input air flow through multiple openings on the inside wall of the inlet diffuser. Said openings or grooves run at a slight angle to the direction of flow to avoid turbulence.

The air conditioning input may be through hollow radial guide vanes attached at the front end to the vanes of the first stage of the low-pressure compressor and to the hollow vanes, open at the back, in the first stage or stages of the low-pressure compressor stator where the pressure is lower than that of the cabin air. In the latter cases, a check valve will be requiered to prevent engine air flow from returning to the cabin on the ground or at low altitude.

When the air conditioning mixes with the low-pressure engine input air, it increases its flow, pressure or density and, therefore, its performance.

One variant involves the placement of a turbine of an air pump and the aircraft outflow valve in a duct through which all the air flows. With the turbine shaft attached to that of an electric generator, to a hydraulic pump or to N2, or accessory gearbox inside the engine.

The aircraft air conditioning exhaust can be also sent through a duct to strike inclined against the tips of the fan blades and first stage of the low speed compresor blades of the turbine engine.

In all these cases, the engine efficiency is increased.

Adventages: this system takes adventage of the high energy of the air conditioning in relation to the exterior, and in some cases does not require moving parts.

### BRIEF DESCRIPTION OF THE DRAWINGS

Figure 1 shows a partial schematic cross-section view of the device of the invention.

Figure 2 shows a partial schematic cross-section view of the low-pressure compressor.

Figure 3 shows a partial schematic cross-section view of the low pressure compressor.

### MORE DETAIL DESCRIPTION OF THE DRAWINGS

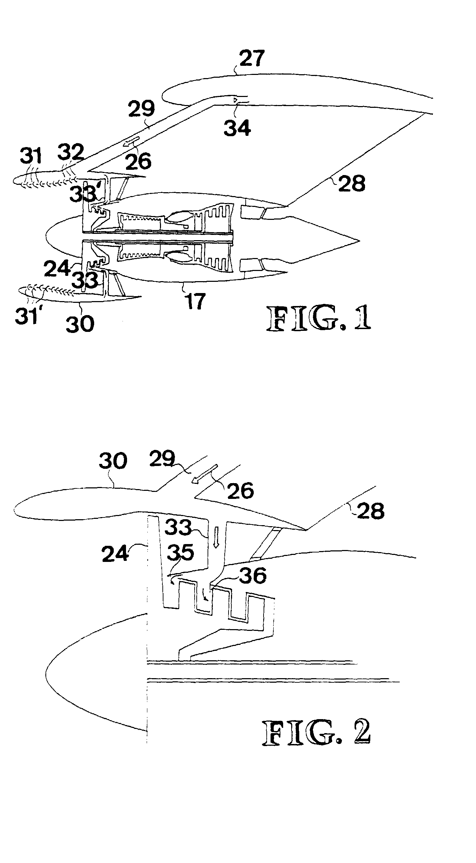

Figure 1 comprises the engine 17, fan, 24, with the air-conditioning, 26, leaving the pressurized cabin through the wing, 27, and pylon, 28, along duct 29 and engine inlet diffuser 30, and discharging through the openings, 31 and 31', inside the inlet diffuser, in the engine air input flow. The arrows, 32, show the movement of the air conditioning through the openings, 31. The hollow fixed vanes, 33 and 33', carry the air conditioning to the front of the vanes in the first stage of the low-pressure compressor or to the vanes of the stator in the first stage or stages of the low-pressure compressor. The check valve is marked 34. Discharge through inlet diffuser is incompatible with that through the hollow vanes in the front to the vanes of the first phase of the low-pressure compressor or to the hollow vanes open at the back on the stator of the first stage or stages of the low-pressure compressor.

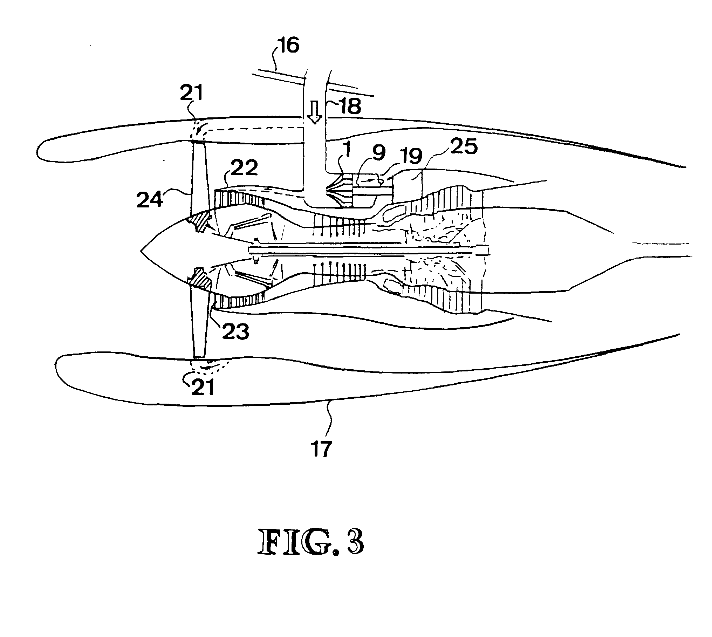

Figure 2 comprises the fan 24, pylon, 28, air-conditioning duct, 29, inlet diffuser 30. The hollow, fixed, vanes 33, carry the air conditioning to the front of the vanes in the first stage of the low-pressure compressor 35 or to the hollow vanes, opened at the back, in the first stage or stages of the low-pressure compressor stator.

Figure 3 comprises the air pump turbine 1, the engine 17, the shaft of the turbine 9, air flowing out of the pressurized cabin through duct 18 drives turbine 1 that is connected to an electric generator, to a hydraulic pump or N2 or accessory gearbox 25 via shaft 9, 19 is the air outlet, the air is also sent through the duct 21 and 21' inside the cowl to strike inclined against the tips of the fan blades 24, and through the duct 22 to strike inclined against the tips of the blades of the first stage of the low speed compresor 23.

Drawings do not show outflow valves.

## Claims

1. An aircraft air conditioning energy recovery device that involves the placement of the aircraft outflow valve in a duct through which all the air conditioning flows, said duct being arranged from the pressurized cabin to the inside of the engine inlet diffuser, through the pylon and in some cases through the wing, with said air-conditioning flow being fed back to the input air flow inside the inlet low pressure zone of the engine.

2. An aircraft air conditioning energy recovery device according to claim 1, wherein the air conditioning input is performed through multiple openings on the inside wall of the inlet diffuser and said openings or grooves run at a slight angle to the direction of flow to avoid turbulence.

3. An aircraft air conditioning energy recovery device according to claim 1, wherein the air conditioning is introduced through hollow radial guide vanes attached at the front end to the vanes of the first stage of the low-pressure compressor.

4. An aircraft air conditioning energy recovery device according to claim 1, wherein the air conditioning is introduced through the hollow vanes, open at the back, in the first stage or stages of the low-pressure compressor stator.

5. An aircraft air conditioning energy recovery device according to claim 1, wherein a check valve is used to prevent engine air flow from returning to the cabin on the ground or at low altitude.

6. An aircraft air conditioning energy recovery device according to claim 1, that involves the placement of an air pump turbine and the aircraft outflow valve in a duct through which all the air flows, with the turbine shaft attached to that of an electric generator, to a hydraulic pump, and to the N2 and accessory gearbox inside the engine.

7. An aircraft air conditioning energy recovery device according to claim 1, wherein the aircraft air conditioning exhaust is sent through a duct to strike inclined against the tips of the fan blades and against the tips of the first stage of the low speed compresor blades of the turbine engine.
